# EUROPÄISCHE PATENTSCHRIFT

(11) **EP 4 543 743 B1**
(45) Veröffentlichungstag und Bekanntmachung des Hinweises auf die Patenterteilung: **03.06.2026**
(21) Anmeldenummer: 23732974.3
(22) Anmeldetag: 16.06.2023
(51) Int. Cl.: B62J 45/411, B62M 6/50, B62M 6/45

(54) **VERFAHREN ZUM BETREIBEN EINER ANTRIEBSEINHEIT EINES ELEKTROFAHRRADS**
METHOD FOR OPERATING A DRIVE UNIT OF AN ELECTRIC BICYCLE
PROCÉDÉ DE FONCTIONNEMENT D'UNE UNITÉ D'ENTRAÎNEMENT D'UNE BICYCLETTE ÉLECTRIQUE

(30) Priorität: 22.06.2022 DE 102022206272
(43) Veröffentlichungstag der Anmeldung: 30.04.2025
(73) Patentinhaber: Robert Bosch GmbH, 70442 Stuttgart (DE)
(72) Erfinder: MANEWALD, Merlin Martin, 72764 Reutlingen (DE); EBERLE, Sebastian, 72072 Tuebingen (DE); REBHOLZ, Jim, 72764 Reutlingen (DE); WEINMANN, Matthias, 72336 Balingen (DE); REISIGE, Christian, 72072 Tuebingen (DE); RECK, Joseph, 70794 Filderstadt (DE)
(86) Internationale Anmeldenummer: PCT/EP2023/066280
(87) Internationale Veröffentlichungsnummer: WO 2023/247362

(56) Entgegenhaltungen:
- DE-A1- 102014 115 716
- DE-A1- 102020 206 102
- US-A1- 2022 135 176

## Beschreibung

### Stand der Technik

Die vorliegende Erfindung betrifft ein Verfahren zum Betreiben einer Antriebseinheit eines Elektrofahrrads, und ein Elektrofahrrad.

Bekannt sind Elektrofahrräder mit Antriebseinheiten, um ein durch einen Fahrer erzeugtes Fahrerdrehmoment mittels Motorkraft zu unterstützen. Üblicherweise erfolgt die motorische Unterstützung dabei nur dann, wenn der Fahrer auch selbst ein gewisses Fahrerdrehmoment aufbringt, das heißt nur während einer Pedalbetätigung durch den Fahrer. Stoppt der Fahrer die Pedalbetätigung, ist vorgesehen oder beispielsweise auch aufgrund gesetzlicher Vorgaben vorgeschrieben, dass die Erzeugung eines unterstützenden Motordrehmoments stoppt. Häufig erfolgt eine Regelung eines motorisch erzeugten Antriebsdrehmoments der Antriebseinheit in Abhängigkeit eines mittels Sensoren erfassten Fahrerdrehmoments. Die während des Pedalierens auftretenden Schwankungen des Fahrerdrehmoments können dabei sehr unterschiedlich ausfallen, wodurch auch die Bereitstellung des Motordrehmoments stark schwanken kann, was sich negativ auf den Fahrkomfort auswirken kann. Beispielsweise wird auf die Druckschrift US 2022/135176 A1 verwiesen.

### Offenbarung der Erfindung

Die Erfindung betrifft ein Verfahren mit den Merkmalen des Anspruchs 1 oder 9, sowie eine Elektrofahrrad nach Anspruch 10. Vorteilhafte Weiterbildungen ergeben sich aus den abhängigen Ansprüchen.

Das erfindungsgemäße Verfahren mit den Merkmalen des Anspruchs 1 zeichnet sich dadurch aus, dass eine einfache und kostengünstige Möglichkeit zur präzisen Regelung oder Steuerung eines Antriebsdrehmoments einer Antriebseinheit eines Elektrofahrrads bereitgestellt werden kann, welche einen besonders hohen Fahrkomfort für einen Fahrer des Elektrofahrrads erlaubt.

Als Fahrerdrehmomentsignal wird insbesondere ein Wert des momentan durch den Fahrer erzeugten Fahrerdrehmoments angesehen, welcher vorzugsweise mittels eines Drehmomentsensors erfasst wird. Alternativ bevorzugt kann das Fahrerdrehmomentsignal ein beliebiges Signal oder eine beliebige Information sein, welche das erzeugte Fahrerdrehmoment repräsentiert, und somit insbesondere einen Fahrerwunsch hinsichtlich einer Motorunterstützung der Antriebseinheit widerspiegelt.

Bevorzugt erfolgt das zweite Filtern des Fahrerdrehmomentsignals mittels des zweiten Tiefpassfilters zeitlich nach dem ersten Filtern des Fahrerdrehmomentsignals mittels des ersten Tiefpassfilters.

Besonders bevorzugt erfolgt bei dem gesteuerten Erzeugen des Motordrehmoments eine derartige Ansteuerung der Antriebseinheit, dass das erzeugte Motordrehmoment direkt proportional zu dem mittels des zweiten Tiefpassfilters gefilterten Fahrerdrehmomentsignal ist.

Mit anderen Worten wird bei dem Verfahren eine Steuerung des mittels der Antriebseinheit erzeugten Motordrehmoments basierend auf einem mittels zweier separater Tiefpassfilter gefilterten Fahrerdrehmomentsignal vorgenommen. Dadurch kann eine besonders flexible Ansteuerung der Antriebseinheit erfolgen, um ein für einen hohen Fahrkomfort möglichst optimales Motordrehmoment bereitzustellen. Insbesondere können einerseits Drehmomentschwankungen des Fahrerdrehmoments bei Bedarf stark herausgefiltert werden, wodurch ein besonders gleichmäßiger Motordrehmoment-Verlauf ermöglicht werden kann. Beispielsweise kann dadurch ein "Eiern" der Motorunterstützung vermieden werden. Andererseits kann in anderen Situationen eine hohe Reaktivität der Motorunterstützung der Antriebseinheit bereitgestellt werden, das heißt eine zeitlich schnelle und direkte Umsetzung des Fahrerwunsches. Dies wird dadurch erreicht, dass mittels der beiden separaten Tiefpassfilter eine besonders hohe Flexibilität in der Filterung des Fahrerdrehmomentsignals bereitgestellt wird. Insbesondere kann dabei zumindest einer der beiden Tiefpassfilter adaptiv ausgebildet sein, um eine optimale Anpassung an die jeweiligen Fahrsituationen während des Fahrbetriebs zu ermöglichen.

Die Unteransprüche zeigen bevorzugte Weiterbildungen der Erfindung.

Bevorzugt weist der zweite Tiefpassfilter eine variable Zeitkonstante auf. Bei der Durchführung des Verfahrens wird die variable Zeitkonstante in Abhängigkeit des Fahrerdrehmomentsignals angepasst. Mit anderen Worten erfolgt eine aktive Anpassung der variablen Zeitkonstante des Tiefpassfilters an den momentanen Verlauf des Fahrerdrehmomentsignals. Beispielsweise kann dabei eine Erhöhung der variablen Zeitkonstante erfolgen, um eine stärkere Glättung des Fahrerdrehmomentsignals zu bewirken. Alternativ kann eine Reduktion der variablen Zeitkonstante erfolgen, um eine weniger starke Glättung des Fahrerdrehmomentsignals zu bewirken, und damit eine höhere Reaktivität des Antriebs bereitzustellen.

Besonders bevorzugt umfasst das Verfahren ferner den Schritt: Ermitteln einer Differenz des Fahrerdrehmomentsignals zwischen einem Eingang und einem Ausgang des zweiten Tiefpassfilters. Die variable Zeitkonstante des zweiten Tiefpassfilters wird dabei in Abhängigkeit der ermittelten Differenz angepasst. Das heißt, die Werte des Fahrerdrehmomentsignals, welche jeweils am Eingang und am Ausgang des zweiten Tiefpassfilters vorliegen, werden voneinander subtrahiert um die Differenz zu bilden. In Abhängigkeit der Höhe der Differenz wird dabei die variable Zeitkonstante des zweiten Tiefpassfilters angepasst. Damit kann eine Adaption der Filterung auf besonders einfache Weise durchgeführt werden.

Vorzugsweise wird die variable Zeitkonstante des zweiten Tiefpassfilters bei ermittelter sinkender Differenz erhöht. Beispielsweise kann eine sinkende Differenz durch Erfassung der Differenzen über einen vorbestimmten Zeitraum ermittelt werden. Alternativ bevorzugt kann ein Gradient der Differenzen ermittelt werden und basierend darauf ein Sinken der Differenzen festgestellt werden.

Basierend auf der ermittelten sinkenden Differenz, oder alternativ basierend auf einem niedrigen momentanen Wert der Differenz, kann auf eine konstante, gleichmäßige Fahrsituation geschlossen werden. In diesem Fall ist beispielsweise eine geringe Reaktivität des Antriebs erforderlich. Somit kann ein starkes Glätten des Fahrerdrehmomentsignals umgesetzt werden, um unerwünschte Schwankungen des Motordrehmoments zu verhindern, und damit einen besonders hohen Fahrkomfort bereitstellen zu können.

Bevorzugt wird die variable Zeitkonstante des zweiten Tiefpassfilters bei ermittelter steigender Differenz verringert. Beispielsweise kann eine steigende Differenz durch Erfassung der Differenzen über einen vorbestimmten Zeitraum ermittelt werden. Alternativ bevorzugt kann ein Gradient der Differenzen ermittelt werden und basierend darauf ein Steigen der Differenzen festgestellt werden. Basierend auf der ermittelten steigenden Differenz, oder alternativ basierend auf einem hohen momentanen Wert der Differenz, kann auf eine dynamische Fahrsituation, beispielsweise eine technisch anspruchsvolle Fahrsituation geschlossen werden. In diesem Fall ist beispielsweise eine hohe Reaktivität des Antriebs erwünscht. Durch Verringerung der variablen Zeitkonstante des zweiten Tiefpassfilters wird die Filterung mittels des zweiten Tiefpassfilters reduziert oder gänzlich deaktiviert. Beispielsweise kann die variable Zeitkonstante gleich Null gesetzt werden. Dadurch kann eine besonders direkte und schnelle Umsetzung des Fahrerwunsches zu einem Motordrehmoment ermöglicht werden.

Weiter bevorzugt wird die variable Zeitkonstante des zweiten Tiefpassfilters auf einen Wert gleich oder unterhalb einer vorbestimmten Schwellwerte-Zeitkonstante reduziert, wenn die ermittelte Differenz größer oder gleich einer vorbestimmten Schwellwert-Differenz ist. Dadurch kann auf analoge Weise zu dem oben beschriebenen eine hohe Reaktivität des Antriebs bereitgestellt werden. Alternativ oder zusätzlich bevorzugt wird die variable Zeitkonstante des zweiten Tiefpassfilters auf einen Wert größer als die vorbestimmte Schwellwert-Zeitkonstante erhöht, wenn die ermittelte Differenz kleiner als die vorbestimmte Schwellwert-Differenz ist. Dadurch kann ebenfalls analog zu dem oben beschriebenen ein Betriebsmodus der Antriebseinheit bereitgestellt werden, bei dem eine starke Filterung umgesetzt wird, um unerwünschte Drehmomentschwankungen des Motordrehmoments zu verhindern. Zudem kann das Verfahren auf besonders einfache Weise zuverlässig genau durchgeführt werden.

Weiter bevorzugt umfasst das Ermitteln des Fahrerdrehmomentsignals den Schritt: Aufzeichnen des Fahrerdrehmomentsignals über eine vorbestimmte Zeitspanne. Dabei erfolgt das Anpassen der variablen Zeitkonstante des zweiten Tiefpassfilters in Abhängigkeit des aufgezeichneten Fahrerdrehmomentsignals. Beispielsweise kann das Fahrerdrehmomentsignal über einen Zeitraum von fünf Sekunden aufgezeichnet werden. Dadurch kann eine weitere Vereinfachung des Verfahrens und eine noch präzisere Abstimmung des Fahrkomforts erreicht werden.

Vorzugsweise umfasst das Verfahren ferner den Schritt: Ermitteln eines Maximalwerts des aufgezeichneten Fahrerdrehmomentsignals, insbesondere innerhalb der vorbestimmten Zeitspanne. Dabei erfolgt das Anpassen der variablen Zeitkonstante des zweiten Tiefpassfilters in Abhängigkeit des ermittelten Maximalwerts. Damit kann das Verfahren auf besonders einfache und kostengünstige Weise durchgeführt werden.

Besonders bevorzugt umfasst das Verfahren ferner den Schritt: Multiplizieren des Fahrerdrehmomentsignals mit einem Unterstützungsfaktor. Das gesteuerte Erzeugen des Motordrehmoments erfolgt dabei mittels des mit dem Unterstützungsfaktor multiplizierten Fahrerdrehmomentsignals. Der Unterstützungsfaktor kann beispielsweise ein vorbestimmter konstanter Wert sein. Alternativ bevorzugt kann der Unterstützungsfaktor variabel, das heißt adaptiv, ausgebildet sein, und beispielsweise von der Größe des Fahrerdrehmomentsignals abhängig angepasst werden. Damit kann die Steuerung der Antriebseinheit auf besonders einfache Weise durchgeführt werden.

Das Multiplizieren des Fahrerdrehmomentsignals erfolgt bevorzugt vor dem zweiten Filtern, insbesondere zwischen dem ersten Filtern mittels des ersten Tiefpassfilters und dem zweiten Filtern mittels des zweiten Tiefpassfilters. Das heißt, mittels des zweiten Filters wird das bereits mit dem Unterstützungsfaktor multiplizierte Fahrerdrehmomentsignal gefiltert.

Alternativ bevorzugt erfolgt das Multiplizieren des Fahrerdrehmomentsignals nach dem zweiten Filtern. In diesem Fall erfolgen das erste Filtern und das zweite Filtern bevorzugt unmittelbar nacheinander.

Weiter bevorzugt weist der erste Tiefpassfilter eine vorbestimmte erste Zeitkonstante auf, die einen konstanten Wert aufweist. Damit kann das Verfahren besonders einfach und kostengünstig durchgeführt werden, wobei eine optimale Aufbereitung des Fahrerdrehmomentsignals bereitgestellt werden kann, um einen möglichst hohen Fahrkomfort zu ermöglichen.

Weiterhin führt die Erfindung zu einem Elektrofahrrad, umfassend eine Antriebseinheit, welche insbesondere eingerichtet ist, um ein Motordrehmoment zur Unterstützung einer Muskelkraft des Fahrers des Elektrofahrrads zu erzeugen, und eine Steuereinheit. Die Steuereinheit ist dabei eingerichtet, die Antriebseinheit gesteuert zu betätigen. Ferner ist die Steuereinheit eingerichtet, das beschriebene Verfahren durchzuführen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine vereinfachte schematische Ansicht eines Elektrofahrrads bei dem ein Verfahren zum Betreiben einer Antriebseinheit des Elektrofahrrads gemäß einem ersten Ausführungsbeispiel der Erfindung durchgeführt wird,
- Figur 2: eine vereinfachte Darstellung eines beispielhaften zeitlichen Drehmoment-Verlaufs bei welchem das Verfahren gemäß dem ersten Ausführungsbeispiel durchgeführt wird,
- Figur 3: eine vereinfachte Darstellung einer Durchführung des Verfahrens gemäß dem ersten Ausführungsbeispiel, und
- Figur 4: eine vereinfachte Darstellung einer Durchführung eines Verfahrens gemäß einem zweiten Ausführungsbeispiel der Erfindung.

### Ausführungsformen der Erfindung

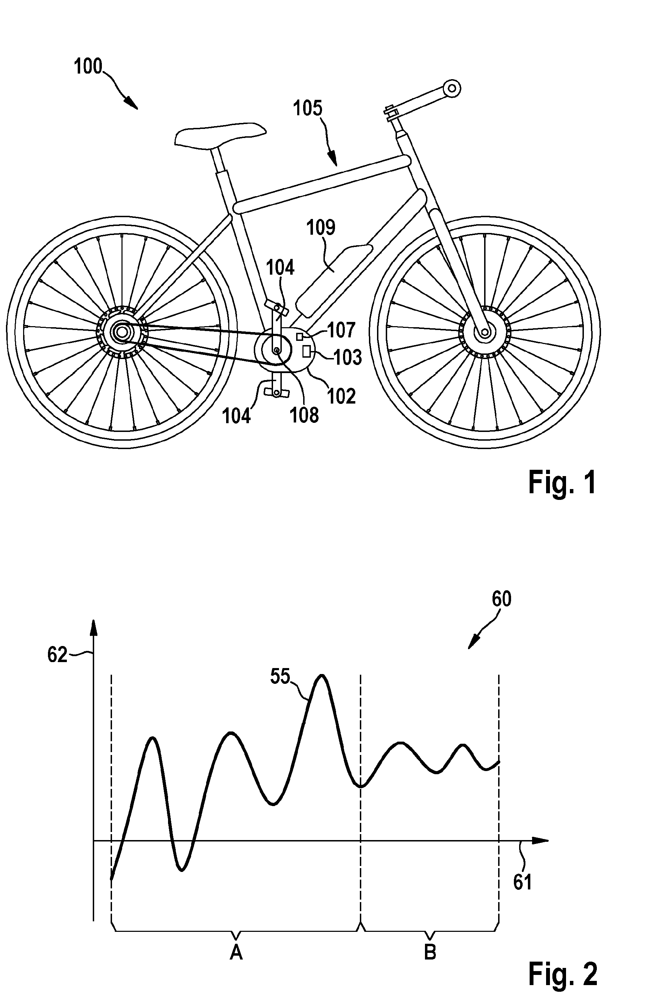

Figur 1 zeigt eine vereinfachte schematische Ansicht eines Elektrofahrrads 100. Das Elektrofahrrad 100 umfasst eine Antriebseinheit 102, welche als ein Elektromotor ausgebildet ist. Die Antriebseinheit 102 ist im Bereich eines Tretlagers 108 des Elektrofahrrads 100 angeordnet, und vorgesehen, um eine über einen Kurbeltrieb 104 aufgebrachte manuelle Tretkraft eines Fahrers des Elektrofahrrads 100 durch ein elektromotorisch erzeugtes Drehmoment zu unterstützen.

Ferner umfasst das Elektrofahrrad 100 einen elektrischen Energiespeicher 109, mittels welchem die Antriebseinheit 102 mit elektrischer Energie versorgbar ist. In die Antriebseinheit 102 ist außerdem eine Steuereinheit 103 integriert.

Die Steuereinheit 103 ist dabei eingerichtet, um die Antriebseinheit 102 in Abhängigkeit einer Pedalbetätigung eines Fahrers des Elektrofahrrads 100 zu betätigen. Im Detail wird die Antriebseinheit 102 derart gesteuert betätigt, dass in Abhängigkeit eines mittels Muskelkraft des Fahrers erzeugten Fahrerdrehmoments ein Motordrehmoment erzeugt wird, um den Fahrer beim Pedalieren motorisch zu unterstützen. Dabei ist vorgesehen, dass die Erzeugung des Motordrehmoments in Abhängigkeit einer Höhe des Fahrerdrehmoments gesteuert wird.

Die Steuereinheit 103 ist dabei eingerichtet, um ein Verfahren zum Betrieben der Antriebseinheit 102 durchzuführen. Mittels des Verfahrens kann während des Fahrbetriebs, also insbesondere während der Fortbewegung, des Elektrofahrrads 100 eine optimierte Betätigung der Antriebseinheit 102 in Abhängigkeit des Fahrerdrehmoments erfolgen.

Der Ablauf des Verfahrens wird nachfolgend in Bezug auf die Figuren 2 bis 4 im Detail beschrieben
Figur 2 zeigt eine beispielhafte Ansicht einer Drehmoment-Aufzeichnung 60, welche während einer Fahrt des Elektrofahrrads 100 erfasst werden kann. Dargestellt ist dabei das Fahrerdrehmoment 62 in Abhängigkeit der Zeit 61. Das Fahrerdrehmoment 62 kann mittels eines Drehmomentsensors 107 (vergleiche Figur 1) erfasst werden. In der Drehmoment-Aufzeichnung 60 der Figur 2 ist somit ein beispielhafter zeitlicher Drehmoment-Verlauf 55 des Fahrerdrehmoments 62 dargestellt.

Wie in der Figur 2 zu erkennen, kann sich der aktuelle Wert des Fahrerdrehmoments 62 über der Zeit 61 periodisch ändern, beispielsweise ähnlich einer Sinusschwingung.

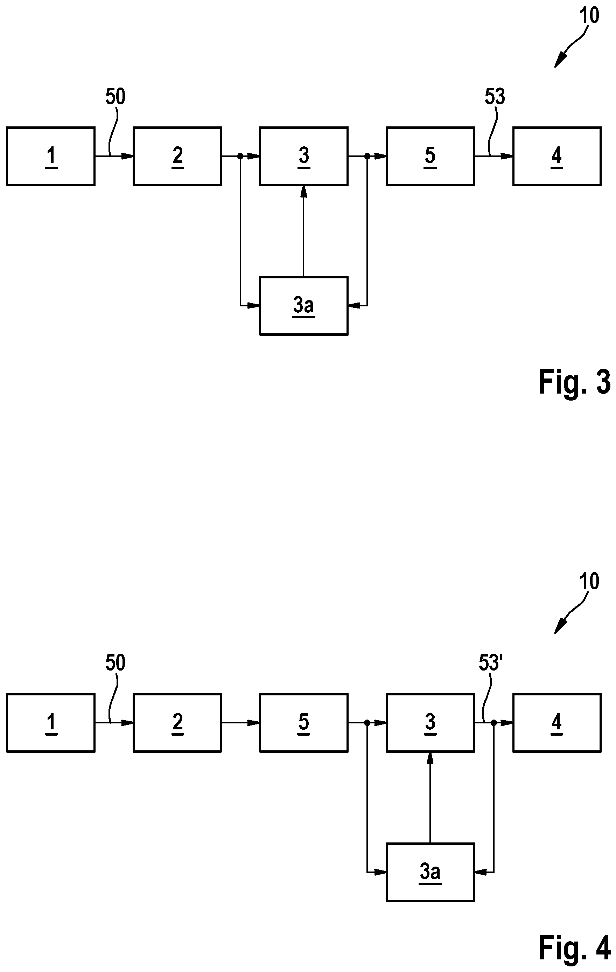

Der Ablauf des Verfahrens 10 gemäß einem ersten Ausführungsbeispiel der Erfindung ist in Figur 3 stark vereinfacht schematisch dargestellt.

Bei dem Verfahren wird das ermittelte Fahrerdrehmoment 62, insbesondere dessen mittels des Drehmomentsensors 107 ermittelter momentaner Wert, als ein Fahrerdrehmomentsignal 50 bereitgestellt. Insbesondere weist das Fahrerdrehmomentsignal 50 somit denselben schwankenden Verlauf wie der in Figur 2 dargestellte zeitliche Drehmoment-Verlauf 55 auf. Dieses Ermitteln 1 des Fahrerdrehmomentsignals 50 erfolgt in dem ersten Verfahrensschritt.

Anschließend erfolgt ein erstes Filtern 2 des Fahrerdrehmomentsignals 50 mittels eines ersten Tiefpassfilters. Der erste Tiefpassfilter weist dabei eine vorbestimmte erste Zeitkonstante auf, welche konstant ist. Damit wird ein erstes Glätten des Fahrerdrehmomentsignals 50 vorgenommen.

Nach dem ersten Filtern 2, bevorzugt unmittelbar danach, erfolgt ein zweites Filtern 3 mittels eines zweiten Tiefpassfilters. Der zweite Tiefpassfilter ist dabei als von dem ersten Tiefpassfilter separater Filter ausgebildet, und weist im Unterschied zum ersten Tiefpassfilter eine variable Zeitkonstante auf.

Im Anschluss an das zweite Filtern 3 mittels des zweiten Tiefpassfilters erfolgt ein Multiplizieren 5 des gefilterten Fahrerdrehmomentsignals 50 mit einem Unterstützungsfaktor.

Der Unterstützungsfaktor kann beispielsweise ein vorbestimmter konstanter Zahlenwert sein. Alternativ bevorzugt kann der Unterstützungsfaktor variabel ausgebildet sein, und beispielsweise in Abhängigkeit einer Höhe des ermittelten Fahrerdrehmoments 62 angepasst werden. Alternativ oder zusätzlich bevorzugt kann der Unterstützungsfaktor durch eine manuelle Fahrereingabe durch den Fahrer anpassbar ausgebildet sein.

In Abhängigkeit des mit dem Unterstützungsfaktor multiplizierten Fahrerdrehmomentsignals 53 wird anschließend die Antriebseinheit 102 von der Steuereinheit 103 gesteuert betätigt. Dies erfolgt in dem Schritt des gesteuerten Erzeugens 4 des Motordrehmoments.

Die variable Zeitkonstante des zweiten Tiefpassfilters wird in Abhängigkeit einer Differenz des Fahrerdrehmomentsignals 50 zwischen einem Eingang und einem Ausgang des zweiten Tiefpassfilters angepasst. Hierfür erfolgt in einem zusätzlichen Schritt das Ermitteln 3a der Differenz zwischen dem Fahrerdrehmomentsignal 50 am Eingang des zweiten Tiefpassfilters und dem Fahrerdrehmomentsignal 50 am Ausgang des zweiten Tiefpassfilters.

Das Anpassen der zweiten Zeitkonstante kann dabei in einer einfachen Ausführungsform derart erfolgen, dass die zweite Zeitkonstante im Laufe der Durchführung des Verfahrens 10 erhöht wird, wenn die Differenz sinkt. Dies ist beispielsweise der Fall, wenn der Verlauf des Fahrerdrehmoments 55 vergleichsweise geringe zeitliche Schwankungen aufweist, wie beispielsweise in der Figur 2 in dem Abschnitt B dargestellt.

Durch die erhöhte zweite Zeitkonstante wird bewirkt, dass bei derartigen niedrigen ermittelten Differenzen eine stärkere Filterung bzw. Glättung des Fahrerdrehmomentsignals erfolgt. Dadurch werden beispielsweise kurzzeitige Änderungen des Fahrerdrehmoments nicht unmittelbar in eine starke Änderung des Motordrehmoments umgesetzt, sondern es wird ein besonders gleichmäßiger Betrieb der Antriebseinheit 102 bewirkt. Dies ist besonders vorteilhaft in Fahrsituationen, in denen eine gleichmäßige Fortbewegung des Elektrofahrrads 100 wünschenswert ist, wenn keine starken Änderungen der Motormomentanforderung notwendig sind. In diesem Fall kann durch die besonders effektive Filterung mittels des zweiten Tiefpassfilters mit hoher Zeitkonstante ein besonders hoher Fahrkomfort bereitgestellt werden, da beispielsweise unerwünschte Motormomentschwankungen vermieden werden können.

Analog kann die zweite Zeitkonstante verringert werden, wenn die Differenz steigt. Dies kann beispielsweise der Fall sein, wenn der Verlauf des Fahrerdrehmoments 55 große zeitliche Schwankungen aufweist, wie beispielsweise in der Figur 2 in dem Abschnitt A dargestellt.

Durch die in diesem Fall verringerte zweite Zeitkonstante wird erreicht, dass bei derartigen hohen Differenzen eine weniger starke Filterung bzw. Glättung des Fahrerdrehmomentsignals 50 erfolgt. Hierdurch reagiert die Antriebseinheit 102 schneller und direkter auf die Änderungen des Fahrerdrehmomentsignals 50, wodurch dem Fahrer das Gefühl gegeben wird, dass der Antrieb reaktiver ist. Dies ist insbesondere in fahrdynamisch schwierigen Fahrsituationen wünschenswert, um einen hohen Fahrkomfort in diesen Fahrsituationen bereitzustellen.

In einer alternativen oder zusätzlichen Ausführungsform des Verfahrens 10 wird jeweils der momentane Wert der im Schritt 3a ermittelten Differenz überwacht. Wenn die ermittelte Differenz größer oder gleich einer vorbestimmten Schwellwert-Differenz ist, wird die variable zweite Zeitkonstante des zweiten Tiefpassfilters auf einen Wert gleich oder unterhalb einer vorbestimmten Schwellwert-Zeitkonstante reduziert. Analog erfolgt bevorzugt eine Erhöhung der variablen zweiten Zeitkonstante des zweiten Tiefpassfilters auf einen Wert größer als die vorbestimmte Schwellwert-Zeitkonstante, wenn die ermittelte Differenz kleiner als die vorbestimmte Schwellwert-Differenz ist. Dadurch kann das Verfahren 10 besonders einfach und kostengünstig durchgeführt werden.

Figur 4 zeigt eine stark vereinfachte schematische Ansicht eines Verfahrens 10 zum Betreiben einer Antriebseinheit 102 eines Elektrofahrrads 100 gemäß einem zweiten Ausführungsbeispiel der Erfindung. Das zweite Ausführungsbeispiel entspricht im Wesentlichen dem ersten Ausführungsbeispiel der Figur 3, mit dem Unterschied einer alternativen zeitlichen Abfolge der Verfahrensschritte. Im Detail erfolgt im zweiten Ausführungsbeispiel das Multiplizieren 5 des Fahrerdrehmomentsignals 50 mit dem Unterstützungsfaktor zeitlich zwischen dem ersten Filtern 2 und dem zweiten Filtern 3. Somit wird das bereits mit dem Unterstützungsfaktor multiplizierte Fahrerdrehmomentsignal 50 mittels des zweiten Tiefpassfilters beim zweiten Filtern 3 gefiltert. Das so gefilterte und multiplizierte Fahrerdrehmomentsignal 53' wird anschließend direkt dem Schritt des gesteuerten Erzeugens 4 des Motordrehmoments bereitgestellt.

Bevorzugt kann das Fahrerdrehmomentsignal 50 und/oder die Differenz in jedem der beschriebenen Ausführungsbeispiele kontinuierlich überwacht und der jeweilige Momentanwert zur Durchführung des Verfahrens 10 verwendet werden.

Besonders vorteilhaft ist alternativ eine Aufzeichnung des Fahrerdrehmomentsignals 50 und/oder der Differenz über eine vorbestimmte Zeitspanne, wobei das Anpassen der variablen zweiten Zeitkonstante des zweiten Tiefpassfilters in Abhängigkeit dieser Aufzeichnung erfolgt. Eine besonders einfache Ausführungsform des Verfahrens 10 kann dabei bereitgestellt werden, wenn das Anpassen der variablen zweiten Zeitkonstante des zweiten Tiefpassfilters in Abhängigkeit eines ermittelten Maximalwerts des aufgezeichneten Fahrerdrehmomentsignals 50 und/oder der Differenz innerhalb der vorbestimmten Zeitspanne erfolgt.

## Patentansprüche

1. Verfahren zum Betreiben einer Antriebseinheit (102) eines Elektrofahrrads (100), umfassend die Schritte:
- Ermitteln (1) eines Fahrerdrehmomentsignals (50), welches auf einem mittels Muskelkraft eines Fahrers des Elektrofahrrads (100) erzeugten Fahrerdrehmoment (55) basiert,
- erstes Filtern (2) des Fahrerdrehmomentsignals (50) mittels eines ersten Tiefpassfilters,
- zweites Filtern (3) des Fahrerdrehmomentsignals (50) mittels eines zweiten Tiefpassfilters,
- gesteuertes Erzeugen (4) eines Motordrehmoments mittels der Antriebseinheit (102) in Abhängigkeit des mittels des zweiten Tiefpassfilters gefilterten Fahrerdrehmomentsignals (53),
- wobei der zweite Tiefpassfilter eine variable Zeitkonstante aufweist, welche in Abhängigkeit des Fahrerdrehmomentsignals (50) angepasst wird,
**gekennzeichnet, durch den Schritt:**
- Ermitteln (3a) einer Differenz des Fahrerdrehmomentsignals (50) zwischen einem Eingang und einem Ausgang des zweiten Tiefpassfilters, wobei die variable Zeitkonstante des zweiten Tiefpassfilters in Abhängigkeit der Differenz angepasst wird **und/oder,**
- Aufzeichnen des Fahrerdrehmomentsignals (50) über eine vorbestimmte Zeitspanne und Anpassen der variablen Zeitkonstante in Abhängigkeit des aufgezeichneten Fahrerdrehmomentsignals (50).

2. Verfahren nach Anspruch 1, wobei die variable Zeitkonstante des zweiten Tiefpassfilters bei ermittelter sinkender Differenz erhöht wird.

3. Verfahren nach Anspruch 1 oder 2, wobei die variable Zeitkonstante des zweiten Tiefpassfilters bei ermittelter steigender Differenz verringert wird.

4. Verfahren nach einem der Ansprüche 1 bis 3,
- wobei die variable Zeitkonstante des zweiten Tiefpassfilters auf einen Wert gleich oder unterhalb einer vorbestimmten Schwellwert-Zeitkonstante reduziert wird, wenn die ermittelte Differenz größer oder gleich einer vorbestimmten Schwellwert-Differenz ist, und/oder
- wobei die variable Zeitkonstante des zweiten Tiefpassfilters auf einen Wert größer als die vorbestimmte Schwellwert-Zeitkonstante erhöht wird, wenn die ermittelte Differenz kleiner als die vorbestimmte Schwellwert-Differenz ist.

5. Verfahren nach Anspruch 1, ferner umfassend den Schritt: Ermitteln eines Maximalwerts des aufgezeichneten Fahrerdrehmomentsignals (50), wobei das Anpassen der variablen Zeitkonstante in Abhängigkeit des Maximalwerts erfolgt.

6. Verfahren nach einem der vorhergehenden Ansprüche, ferner umfassend den Schritt: Multiplizieren (5) des Fahrerdrehmomentsignals (50) mit einem Unterstützungsfaktor, wobei das gesteuerte Erzeugen des Motordrehmoments mittels des mit dem Unterstützungsfaktor multiplizierten Fahrerdrehmomentsignal (53, 53') erfolgt.

7. Verfahren nach Anspruch 6, wobei das Multiplizieren (5) des Fahrerdrehmomentsignals (50) vor oder nach dem zweiten Filtern (2) erfolgt.

8. Verfahren nach einem der vorhergehenden Ansprüche, wobei der erste Tiefpassfilter eine vorbestimmte konstante Zeitkonstante aufweist.

9. Verfahren zum Betreiben einer Antriebseinheit (102) eines Elektrofahrrads (100), umfassend die Schritte:
- Ermitteln (1) eines Fahrerdrehmomentsignals (50), welches auf einem mittels Muskelkraft eines Fahrers des Elektrofahrrads (100) erzeugten Fahrerdrehmoment (55) basiert,
- erstes Filtern (2) des Fahrerdrehmomentsignals (50) mittels eines ersten Tiefpassfilters,
- zweites Filtern (3) des Fahrerdrehmomentsignals (50) mittels eines zweiten Tiefpassfilters, und
- gesteuertes Erzeugen (4) eines Motordrehmoments mittels der Antriebseinheit (102) in Abhängigkeit des mittels des zweiten Tiefpassfilters gefilterten Fahrerdrehmomentsignals (53),
**gekennzeichnet durch den Schritt,** Multiplizieren (5) des Fahrerdrehmomentsignals (50) mit einem Unterstützungsfaktor, wobei das gesteuerte Erzeugen des Motordrehmoments mittels des mit dem Unterstützungsfaktor multiplizierten Fahrerdrehmomentsignal (53, 53') erfolgt.

10. Elektrofahrrad, umfassend eine Antriebseinheit (102) und eine Steuereinheit (103), welche eingerichtet ist, die Antriebseinheit (102) gesteuert zu betätigen, wobei die Steuereinheit (103) ferner eingerichtet ist, ein Verfahren nach einem der vorhergehenden Ansprüche durchzuführen.

## Claims

1. Method for operating a drive unit (102) of an electric bicycle (100), comprising the following steps:
- determination (1) of a rider torque signal (50) which is based on a rider torque (55) generated by means of muscle power of a person riding the electric bicycle (100),
- first filtering (2) of the rider torque signal (50) by means of a first low-pass filter,
- second filtering (3) of the rider torque signal (50) by means of a second low-pass filter,
- controlled generation (4) of a motor torque by means of the drive unit (102) in dependence on the rider torque signal (53) filtered by means of the second low-pass filter,
- wherein the second low-pass filter has a variable time constant which is adapted in dependence on the rider torque signal (50),
**characterized by** the following step:
- determination (3a) of a difference of the rider torque signal (50) between an input and an output of the second low-pass filter, wherein the variable time constant of the second low-pass filter is adapted in dependence on the difference, and/or
- recording of the rider torque signal (50) over a predetermined time period and adaptation of the variable time constant in dependence on the recorded rider torque signal (50).

2. Method according to Claim 1, wherein the variable time constant of the second low-pass filter is increased when a decreasing difference is determined.

3. Method according to Claim 1 or 2, wherein the variable time constant of the second low-pass filter is decreased when an increasing difference is determined.

4. Method according to one of Claims 1 to 3,
- wherein the variable time constant of the second low-pass filter is reduced to a value equal to or less than a predetermined threshold time constant when the determined difference is greater than or equal to a predetermined threshold difference, and/or
- wherein the variable time constant of the second low-pass filter is increased to a value greater than the predetermined threshold time constant when the determined difference is less than the predetermined threshold difference.

5. Method according to Claim 1, also comprising the following step: determination of a maximum value of the recorded rider torque signal (50), wherein the adaptation of the variable time constant takes place in dependence on the maximum value.

6. Method according to one of the preceding claims, also comprising the following step: multiplication (5) of the rider torque signal (50) by a support factor, wherein the controlled generation of the motor torque takes place by means of the rider torque signal (53, 53') multiplied by the support factor.

7. Method according to Claim 6, wherein the multiplication (5) of the rider torque signal (50) takes place before or after the second filtering (2).

8. Method according to one of the preceding claims, wherein the first low-pass filter has a predetermined, constant time constant.

9. Method for operating a drive unit (102) of an electric bicycle (100), comprising the following steps:
- determination (1) of a rider torque signal (50) which is based on a rider torque (55) generated by means of muscle power of a person riding the electric bicycle (100),
- first filtering (2) of the rider torque signal (50) by means of a first low-pass filter,
- second filtering (3) of the rider torque signal (50) by means of a second low-pass filter, and
- controlled generation (4) of a motor torque by means of the drive unit (102) in dependence on the rider torque signal (53) filtered by means of the second low-pass filter,
**characterized by** the following step: multiplication (5) of the rider torque signal (50) by a support factor, wherein the controlled generation of the motor torque takes place by means of the rider torque signal (53, 53') multiplied by the support factor.

10. Electric bicycle, comprising a drive unit (102) and a control unit (103) which is set up to actuate the drive unit (102) in a controlled manner, wherein the control unit (103) is further set up to carry out a method according to one of the preceding claims.

## Revendications

1. Procédé permettant de faire fonctionner une unité d'entraînement (102) d'une bicyclette électrique (100), comprenant les étapes consistant à :
- déterminer (1) un signal de couple du cycliste (50) qui est basé sur un couple du cycliste (55) généré au moyen de la force musculaire d'un cycliste utilisant la bicyclette électrique (100),
- effectuer un premier filtrage (2) du signal de couple du cycliste (50) au moyen d'un premier filtre passe-bas,
- effectuer un second filtrage (3) du signal de couple du cycliste (50) au moyen d'un second filtre passe-bas,
- générer (4), de manière commandée, un couple moteur au moyen de l'unité d'entraînement (102) en fonction du signal de couple du cycliste (53) filtré au moyen du second filtre passe-bas,
- le second filtre passe-bas présentant une constante de temps variable adaptée en fonction du signal de couple du cycliste (50),
**caractérisé par** l'étape consistant à :
- déterminer (3A) une différence du signal de couple du cycliste (50) entre une entrée et une sortie du second filtre passe-bas, la constante de temps variable du second filtre passe-bas étant adaptée en fonction de la différence, et/ou
- enregistrer le signal de couple du cycliste (50) sur un intervalle de temps prédéterminé et adapter la constante de temps variable en fonction du signal de couple du cycliste (50) enregistré.

2. Procédé selon la revendication 1, dans lequel la constante de temps variable du second filtre passe-bas est augmentée lorsqu'il est déterminé que la différence décroît.

3. Procédé selon la revendication 1 ou 2, dans lequel la constante de temps variable du second filtre passe-bas est réduite lorsqu'il est déterminé que la différence croît.

4. Procédé selon l'une des revendications 1 à 3,
- dans lequel la constante de temps variable du second filtre passe-bas est réduite à une valeur égale ou inférieure à une constante de temps de seuil prédéterminée lorsque la différence déterminée est supérieure ou égale à une différence de seuil prédéterminée, et/ou
- dans lequel la constante de temps variable du second filtre passe-bas est augmentée à une valeur supérieure à la constante de temps de seuil prédéterminée lorsque la différence déterminée est inférieure à la différence de seuil prédéterminée.

5. Procédé selon la revendication 1, comprenant en outre l'étape consistant à : déterminer une valeur maximale du signal de couple du cycliste (50) enregistré, l'adaptation de la constante de temps variable étant effectuée en fonction de la valeur maximale.

6. Procédé selon l'une des revendications précédentes, comprenant en outre l'étape consistant à : multiplier (5) le signal de couple du cycliste (50) par un facteur d'assistance, la génération commandée du couple moteur s'effectuant au moyen du signal de couple du cycliste (53, 53') multiplié par le facteur d'assistance.

7. Procédé selon la revendication 6, **caractérisé en ce que** la multiplication (5) du signal de couple du cycliste (50) est effectuée avant ou après le second filtrage (2).

8. Procédé selon l'une des revendications précédentes, dans lequel le premier filtre passe-bas présente une constante de temps constante prédéterminée.

9. Procédé permettant de faire fonctionner une unité d'entraînement (102) d'une bicyclette électrique (100), comprenant les étapes consistant à :
- déterminer (1) un signal de couple du cycliste (50) qui est basé sur un couple du cycliste (55) généré au moyen de la force musculaire d'un cycliste utilisant la bicyclette électrique (100),
- effectuer un premier filtrage (2) du signal de couple du cycliste (50) au moyen d'un premier filtre passe-bas,
- effectuer un second filtrage (3) du signal de couple du cycliste (50) au moyen d'un second filtre passe-bas, et
- générer (4), de manière commandée, un couple moteur au moyen de l'unité d'entraînement (102) en fonction du signal de couple du cycliste (53) filtré au moyen du second filtre passe-bas,
**caractérisé par** l'étape consistant à multiplier (5) le signal de couple du cycliste (50) par un facteur d'assistance, la génération commandée du couple moteur étant effectuée au moyen du signal de couple du cycliste (53, 53') multiplié par le facteur d'assistance.

10. Bicyclette électrique, comprenant une unité d'entraînement (102) et une unité de commande (103), laquelle est conçue pour commander l'unité d'entraînement (102), l'unité de commande (103) étant conçue pour mettre en œuvre un procédé selon l'une des revendications précédentes.
